# EUROPÄISCHE PATENTSCHRIFT

(11) **EP 3 171 737 B1**
(45) Veröffentlichungstag und Bekanntmachung des Hinweises auf die Patenterteilung: **02.10.2019**
(21) Anmeldenummer: 15735899.5
(22) Anmeldetag: 01.07.2015
(51) Int. Cl.: A47G 27/02, C09D 131/04, C08L 31/04

(54) **WÄSSERIGE, POLYVINYLALKOHOL-STABILISIERTE VINYLACETAT-ETHYLEN-COPOLYMER-DISPERSION MIT HOHER FÜLLSTOFF-VERTRÄGLICHKEIT FÜR TEPPICHBESCHICHTUNGS-ZUSAMMENSETZUNGEN**
WITH POLYVINYL ALCOHOL STABILISED VINYL ACETATE-ETHYLENE-COPOLYMER AQUEOUS DISPERSION WITH HIGH COMPATIBILITY WITH FILLERS FOR COATING COMPOSITIONS FOR CARPETS
DISPERSION AQUEUSE D'UN COPOLYMÈRE D'ACÉTATE DE VINYLE ET D'ÉTHYLÈNE STABILISÉE AVEC D'ALCOOL POLYVINYLIQUE ET AVEC UNE GRANDE COMPATIBILITÉ AVEC UNE CHARGE MINÉRALE POUR DES COMPOSITIONS DE REVÊTEMENT DE TAPIS

(30) Priorität: 24.07.2014 DE 102014214472
(43) Veröffentlichungstag der Anmeldung: 31.05.2017
(73) Patentinhaber: Wacker Chemie AG, 81737 München (DE)
(72) Erfinder: KÜNSTLE, Holger, 84489 Burghausen (DE); MELCHIN, Timo, 84561 Mehring (DE); TANGELDER, Robert, NL-1251 NR Laren (NL)
(74) Vertreter: Schuderer, Michael
(86) Internationale Anmeldenummer: PCT/EP2015/064962
(87) Internationale Veröffentlichungsnummer: WO 2016/012209

(56) Entgegenhaltungen:
- EP-A1- 1 110 978
- EP-A1- 1 174 447
- EP-A1- 1 215 218
- US-A- 4 735 986
- US-A1- 2007 112 128

## Beschreibung

Die Erfindung betrifft Teppichbeschichtungs-Zusammensetzungen zur Verfestigung von Teppichen, welche eine Vinylacetat-Ethylen-Copolymer-Dispersion mit hoher Füllstoff-Verträglichkeit enthalten, sowie Teppiche, welche mit einer solchen Vinylacetat-Ethylen-Copolymer-Dispersion mit hoher FüllstoffVerträglichkeit beschichtet sind.

Bei der Herstellung von Teppichen, beispielsweise Bahnware oder Teppichfliesen, wird der Teppichflor aus Faserbüscheln (Tuft) gebildet, welche beispielsweise in Form von Schlaufen in ein gewebtes oder nicht-gewebtes Trägermaterial (primary backing) gesteckt werden. Die Schlaufen sind nur lose mit dem flächigen Trägermaterial verbunden (Tufting-Teppich). Zur Herstellung von Nadelfilz-Teppichen werden die Faserbüschel vernadelt. Bei Webteppichen werden die Faserbüschel mit dem Trägermaterial verwebt.

Zur Verbesserung der Anbindung des Teppichflors an das flächige Trägermaterial wird ein Bindemittel auf die Rückseite des Trägermaterials aufgetragen. Im Allgemeinen werden wässrige Polymerdispersionen, welche mit Füllstoffen, beispielsweise Kreide, gefüllt sind, und weitere Zusatzstoffe wie Verdicker enthalten können, als Schaum oder ungeschäumt aufgetragen (Vorstrich oder Precoat).

Vor allem zur Verbesserung der Dimensionsstabilität der Teppiche werden diese mit einem weiteren Trägermaterial (Teppichrücken, secondary backing) ausgerüstet. Dabei handelt es sich im Allgemeinen um ein Gewebe aus Kunstfaser wie Polypropylen oder aus Naturfaser wie Jute. Zur Anbindung des Teppichrückens an den nach dem Vorstrich erhaltenen Teppich wird erneut ein Bindemittel aufgetragen. Im Allgemeinen werden auch hierzu wässrige Polymerdispersionen, welche mit Füllstoffen, beispielsweise Kreide, gefüllt sind, und weitere Zusatzstoffe wie Verdicker enthalten können, als Schaum oder ungeschäumt aufgetragen (Zweitstrich oder secondary coating).

Die WO 90/00967 A1 beschreibt die Verwendung von wässrigen Dispersionen von Vinylacetat-Ethylen-Copolymeren oder von Styrol-Butadien-Copolymeren oder von Styrol-Acrylat-Copolymeren anstelle von PVC-Plastisol als Bindemittel bei der Teppichherstellung.

In dem US-Patent US 3,779,799 wird die Herstellung eines Tufting-Teppichs beschrieben, wobei als Vorstrich eine Bindemittel-Zusammensetzung eingesetzt wird, welche als Bindemittel eine Vinylacetat-Ethylen-Copolymer-Dispersion (VAE-Copolymer-Dispersion) oder eine Polyethylen-Dispersion oder eine Dispersion eines carboxylierten Styrol-Butadien-Copolymers enthält.

Das US-Patent US 5,026,765 beschreibt eine Teppichbeschichtungs-Zusammensetzung mit einer Vinylacetat-Ethylen-Copolymer-Dispersion, wobei das Copolymer noch Monomereinheiten enthält deren Homopolymere eine Tg von mindestens 50°C aufweisen.

Das GB-Patent GB 1,298,155 beschreibt Teppichbeschichtungs-Zusammensetzungen mit einem vernetzbaren Bindemittel auf Basis einer wässrigen Mischung aus Vinylacetat-Ethylen-Copolymer, Polyvinylalkohol (PVOH) und Glyoxal.

Aus der WO 2010/089142 A1 ist eine Vinylacetat-Ethylen-Copolymer-Dispersion bekannt, welche als Bindemittel bei der Teppichherstellung eingesetzt wird. Das Copolymer enthält lediglich 1 bis 4 Gew.-% Ethylen und ist ausschließlich mit Emulgator stabilisiert, wobei gegebenenfalls kleine Mengen an Schutzkolloid zur Stabilisierung mitverwendet werden können.

Zur Verbesserung der Haftung an Polyvinylbutyralfolie (als Teppichrücken) wird in der WO 2006/007157 A1 vorgeschlagen ein Vinylacetat-Ethylen-Copolymer einzusetzen, welches noch 1 bis 10 Gew.-% Comonomereinheiten enthält, welche funktionelle Gruppen wie Carboxyl-, Amid-, N-Methylol- oder Hydroxyalkyl-Gruppen enthalten. Bei der Herstellung des Copolymers wird ein Gemisch aus Emulgator und 0,05 bis 4 Gew.-% Schutzkolloid eingesetzt.

In dem US-Patent 6,359,076 wird zur Verbesserung der Wasserfestigkeit von Teppichbeschichtungen vorgeschlagen, vernetzbare Vinylacetat-Ethylen-Copolymere, welche OH-funktionelle Monomereinheiten enthalten, in Kombination mit einem Vernetzer einzusetzen.

In der WO 2011/139267 A1 und der WO 2011/140065 A2 wird vorgeschlagen die Qualität von Teppichbeschichtungen auf Basis von Vinylacetat-Ethylen-Copolymeren dadurch zu verbessern, dass auf die Stabilisierung mit Schutzkolloid verzichtet wird, ausschließlich mit Emulgator stabilisiert wird, und funktionelle, vernetzbare Comonomere wie Silan-funktionelle oder multifunktionelle Comonomere copolymerisiert werden.

Aus der WO 2012/020319 A2 oder der WO 2012/020321 A2 sind Teppiche bekannt, welche sich durch gute Flammfestigkeit oder gute Waschbarkeit auszeichnen. Als Bindemittel wurde eine Vinylacetat-Ethylen-Copolymer-Dispersion eingesetzt, mit einer mittleren Teilchengröße dw von 50 bis 500 nm, welche mittels Stabilisierung mit Emulgator eingestellt wurde, wobei gegebenenfalls noch bis zu 3 % Schutzkolloid als Costabilisator verwendet werden kann.

Gegenstand der WO 2013/093547 A2 ist ein Teppich-Bindemittel dessen Zusammensetzung für Rezepturen mit Ruß als Füllstoff optimiert ist. Das Bindemittel enthält eine Vinylacetat-Ethylen-Copolymer-Dispersion, welche mit Emulgator und Celluloseether stabilisiert ist.

Die WO 2013/123210 A1 betrifft Teppiche zu deren Herstellung ein Bindemittel-Gemisch aus einer Vinylacetat-Ethylen-Copolymer-Dispersion und einer Styrol-Butadien-Copolymer-Dispersion eingesetzt wurde. Zur Verbesserung der Kompatibilität der zwei verschiedenen Polymerdispersionen wird vorgeschlagen bei der VAE-Dispersion auf Polyvinylalkohol zu verzichten und allenfalls bis zu 1,5 Gew.-% Polyvinylalkohol, bezogen auf Comonomere, bei deren Herstellung als Schutzkolloid einzusetzen.

Die WO 2014/031579 A2 betrifft Teppichbeschichtungs-Zusammensetzung, welche als Bindemittel unter anderem eine VAE-Dispersion enthalten kann, welche mit Emulgator stabilisiert ist und gegebenenfalls noch bis zu 1,5 Gew.-% Polyvinylalkohol als Costabilisator enthalten kann. Diese Dispersion wird mit einem alpha-Olefin-Carbonsäure-Copolymer und einem Vernetzer abgemischt.

In der WO 99/10396 A1 wird vorgeschlagen, zur Verbesserung der Rheologie von VAE-Dispersionen mit einem hohen Feststoffgehalt von mindestens 65 Gew.-%, diese in Gegenwart eines Stabilisator-Gemisches aus mehr als 3 Gew.-%, vorzugsweise 4 bis 5 Gew.-% niedermolekularem Polyvinylalkohol und 1 bis 4 Gew.-% nichtionischem Emulgator mit einer definierten HLB herzustellen.

Die WO 2013/001379 A2 beschreibt mit Polyvinylalkohol stabilisierte VAE-Dispersionen. Zur Optimierung der Viskosität wird zu deren Stabilisierung ein Gemisch aus 0,5 bis 3 Gew.-% vollverseiftem Polyvinylalkohol und 1,5 bis 4 Gew.-% teilverseiftem Polyvinylalkohol verwendet.

Das US-Patent US 4,921,898 betrifft wässrige Klebemittel auf Basis einer Vinylacetat-Ethylen-Copolymer-Dispersion, welche in Gegenwart einer Stabilisator-Kombination aus 2 bis 4 Gew.-% eines niedermolekularen Polyvinylalkohols und 2 bis 4 Gew.-% eines Emulgators hergestellt wurde. Das Klebemittel zeichnet sich durch eine schnelle Abbindung aus.

In der US 4,239,563 werden wässrige Vinylacetat-Ethylen-Copolymer-Dispersionen als Bindemittel zur Verfestigung von Teppichen beschrieben. Gegenüber Styrol-Butadien-Latices wird die geringere Emission von VOCs (volatile organic compounds) hervorgehoben. Die Herstellung der VAE-Dispersion erfolgt mittels Emulsionspolymerisation unter Verwendung von Emulgator und/oder Schutzkolloid (unter anderem Polyvinylalkohol). Das VAE-Copolymer hat einen hohen Ethylengehalt von 30 bis 80 Gew.-%, bezogen auf das Gesamtgewicht der Comonomere.

Das Patent US 4,735,986 beschreibt als Stand der Technik für Teppichbindemittel eine Zusammensetzung mit einer Vinylacetat-Ethylen-Copolymer-Dispersion, welche mit 5 Gew.-% Polyvinylalkohol stabilisiert ist, wobei sich der Polyvinylalkohol-Anteil zusammensetzt aus einem niederviskosen, teilverseiftem PVOH und einem mittelviskosen, teilverseiften PVOH. Bemängelt wird die zu niedrige Füllstoffverträglichkeit, die mangelnde Kompatibilität zu Kreiden unterschiedlicher Spezifikation, und die geringe Verträglichkeit mit Styrol-Butadien-Copolymer-Dispersionen. Zur Verbesserung des Eigenschaftsprofils wird vorgeschlagen bei der Polymerisation ein Stabilisatorgemisch aus teilhydrolysiertem PVOH, vollhydrolysiertem PVOH und einem nichtionischen, polyalkoxylierten Emulgator einzusetzen.

Nachteilig bei den bisher als Bindemittel in Teppichbeschichtungs-Zusammensetzungen eingesetzten Vinylacetat-Ethylen-Copolymer-Dispersionen, welche allein mit Polyvinylalkohol stabilisiert sind, ist deren unzureichende Füllstoffverträglichkeit, beispielsweise mit Kreide, in hochgefüllten Rezepturen. Durch den Coeinsatz von Emulgatoren während der Polymerisation oder durch die nachträgliche Zugabe von Emulgatoren kann die Füllstoffverträglichkeit einer wässrigen Vinylacetat-Ethylen-Copolymer Dispersion zwar verbessert werden, allerdings veringern sich durch die Zugabe von Emulgatoren auch die mechanischen Festigkeiten der damit erhaltenen Beschichtung.

Es bestand daher die Aufgabe eine wässerige, mit Polyvinylalkohol stabilisierte Vinylacetat-Ethylen-Copolymer-Dispersion zur Verfügung zu stellen, welche sich bei der Verwendung als Bindemittel in Teppichbeschichtungs-Zusammensetzungen auch mit großen Mengen an Füllstoffen (bis zu 1400 Gew.-% Füllstoff bezogen auf VAE-Copolymer trocken/trocken) verarbeiten lässt, und sowohl bei der Verwendung im Vorstrich als auch im Zweitstrich zu hohen mechanischen Festigkeiten führt.

Gegenstand der Erfindung ist eine Teppichbeschichtungs-Zusammensetzung zur Verfestigung von Teppichen enthaltend eine wässerige Vinylacetat-Ethylen-Copolymer-Dispersion, welche mittels radikalisch initiierter Emulsionspolymerisation, in wässerigem Medium, von Vinylacetat und Ethylen und gegebenenfalls weiteren ethylenisch ungesättigten Comonomeren, erhalten wird, dadurch gekennzeichnet, dass zur Stabilisierung der Dispersion 5 bis 10 Gew.-%, bezogen auf das Gesamtgewicht der Comonomeren, eines oder mehrerer, teilverseifter und niedermolekularer Polyvinylalkohole mit einem Hydrolysegrad von jeweils 80 bis 95 Mol-% und einer Höppler-Viskosität, in 4 %-iger wässriger Lösung, von jeweils 1 bis 5 mPas (Methode nach Höppler bei 20°C, DIN 53015) enthalten sind, und 100 bis 1400 Gew.-% Füllstoff, bezogen auf 100 Gew% Vinylacetat-Ethylen-Copolymer (fest/fest) enthalten sind.

Diese wässerige Vinylacetat-Ethylen-Copolymer-Dispersion zeichnet sich durch hohe Füllstoffverträglichkeit aus. Unter hoher Füllstoffverträglichkeit wird verstanden, dass mit diesen wässerigen Vinylacetat-Ethylen-Copolymer-Dispersionen Teppichbeschichtungs-Zusammensetzungen zugänglich werden, welche bei Füllgraden von 600 Gew.-% bis 1400 Gew.-% Füllstoff bezogen auf VAE-Copolymer (trocken/trocken) und einem Feststoffgehalt von 75 bis 85 Gew.-%, vor der Zugabe eines Verdickungsmittels, eine Brookfield RV Viskosität von < 3000 mPas (Messung mit Brookfield RV Messgerät mit Spindel 4, 20 Upm, bei 25°C) aufweisen.

Ist die Viskosität einer Teppichbeschichtungs-Zusammensetzung vor Zugabe des Verdickungsmittels höher, sind die Einarbeitungszeiten für den Füllstoff im industriellen Maßstab unakzeptabel lang, und es besteht die Gefahr von nicht dispergierten Füllstoffklumpen, die das Teppichgewebe zerstören können.

Vinylacetat wird im Allgemeinen in einer Menge von 65 bis 99 Gew.-%, vorzugsweise 80 bis 95 Gew.-%, jeweils bezogen auf das Gesamtgewicht der Monomere, copolymerisiert. Ethylen wird im Allgemeinen in einer Menge von 1 bis 30 Gew.-%, vorzugsweise 5 bis 20 Gew.-%, jeweils bezogen auf das Gesamtgewicht der Monomere, copolymerisiert. Gegebenenfalls können noch bis zu 10 Gew.-%, vorzugsweise 0,1 bis 10 Gew.-%, jeweils bezogen auf das Gesamtgewicht der Monomere, noch weitere Comonomere copolymerisiert werden. Die Angaben in Gew.-% für die Comonomere addieren sich jeweils auf 100 Gew.-%.

Geeignete weitere Comonomeren sind solche aus der Gruppe der Vinylester mit 3 bis 12 C-Atomen im Carbonsäurerest wie Vinylpropionat, Vinyllaurat, Vinylester von alpha-verzweigten Carbonsäuren mit 9 bis 11 C-Atomen wie VeoVa^{R}9, VeoVa^{R}10, VeoVa^{R}11. Geeignet sind auch Methacrylsäureester oder Acrylsäureester von unverzweigten oder verzweigten Alkoholen mit 1 bis 15 C-Atomen wie Methylacrylat, Methylmethacrylat, Ethylacrylat, Ethylmethacrylat, Propylacrylat, Propylmethacrylat, n-Bütylacrylat, n-Butylmethacrylat, 2-Ethylhexylacrylat, Norbornylacrylat. Geeignet sind auch Vinylhalogenide wie Vinylchlorid.

Geeignete weitere Comonomere sind auch ethylenisch ungesättigte Mono- und Dicarbonsäuren, vorzugsweise Acrylsäure, Methacrylsäure, Fumarsäure und Maleinsäure; ethylenisch ungesättigte Carbonsäureamide und -nitrile, vorzugsweise Acrylamid und Acrylnitril; Mono- und Diester der Fumarsäure und Maleinsäure wie die Diethyl- und Diisopropylester, sowie Maleinsäureanhydrid, ethylenisch ungesättigte Sulfonsäuren bzw. deren Salze, vorzugsweise Vinylsulfonsäure, 2-Acrylamido-2-methyl-propansulfonsäure. Weitere Beispiele sind vorvernetzende Comonomere wie mehrfach ethylenisch ungesättigte Comonomere, beispielsweise Divinyladipat, Diallylmaleat, Allylmethacrylat oder Triallylcyanurat, oder nachvernetzende Comonomere, beispielsweise Acrylamidoglykolsäure (AGA), Methylacrylamidoglykolsäuremethylester (MAGME), N-Methylolacrylamid (NMA), N-Methylolmethacrylamid (NMMA), N-Methylolallylcarbamat, Alkylether wie der Isobutoxyether oder Ester des N-Methylolacrylamids, des N-Methylolmethacrylamids und des N-Methylolallylcarbamats.

Geeignet sind auch Monomere mit Hydroxy- oder Carboxyl-Gruppen, wie beispielsweise Methacrylsäure- und Acrylsäurehydroxyalkylester wie Hydroxyethyl-, Hydroxypropyl- oder Hydroxybutylacrylat oder -methacrylat sowie 1,3-Dicarbonylverbindungen wie Acetacetoxyethylacrylat, Acetacetoxypropylmethacrylat, Acetacetoxyethylmethacrylat, Acetacetoxybutylmethacrylat, 2,3-Di(acetacetoxy)propylmethacrylat und Acetessigsäureallylester.

Geeignete weitere Comonomere sind auch epoxidfunktionelle Comonomere wie Glycidylmethacrylat, Glycidylacrylat, Allylglycidether, Vinylglycidether. Weitere Beispiele für geeignete weitere Comonomere sind siliciumfunktionelle Comonomere, wie Acryloxypropyltri(alkoxy)- und Methacryloxypropyltri(alkoxy)-Silane, Vinyltrialkoxysilane und Vinylmethyldialkoxysilane, vorzugsweise mit Alkyl- bzw- Alkoxygruppen mit jeweils 1 bis 2 C-Atomen, beispielsweise Vinyltrimethoxysilan, Vinyltriethoxysilan, 3-Methacryloxypropyltrimethoxysilan.

Die Herstellung der Vinylacetat-Ethylen-Copolymer-Dispersion erfolgt nach dem Emulsionspolymerisationsverfahren, wobei die Polymerisationstemperatur im allgemeinen 40°C bis 120°C, vorzugsweise 60°C bis 90°C beträgt und wobei bei einem Druck von im Allgemeinen 5 bis 100 bar abs. gearbeitet wird. Die Initiierung der Polymerisation erfolgt vorzugsweise mit den für die Emulsionspolymerisation gebräuchlichen Redox-Initiator-Kombinationen. Beispiele für geeignete Oxidationsinitiatoren sind die Natrium-, Kalium- und Ammoniumsalze der Peroxodischwefelsäure, Wasserstoffperoxid, t-Butylperoxid, t-Butylhydroperoxid, Kaliumperoxodiphosphat, t-Butylperoxopivalat, Cumolhydroperoxid, Isopropylbenzolmonohydroperoxid, Azobisisobutyronitril. Bevorzugt werden die Natrium-, Kalium- und Ammoniumsalze der Peroxodischwefelsäure und Wasserstoffperoxid. Die genannten Initiatoren werden im allgemeinen in einer Menge von 0,01 bis 2,0 Gew.-%, bezogen auf das Gesamtgewicht der Monomere, eingesetzt. Geeignete Reduktionsmittel sind die Sulfite und Bisulfite der Alkalimetalle und von Ammonium, beispielsweise Natriumsulfit, die Derivate der Sulfoxylsäure wie Zink- oder Alkaliformaldehydsulfoxylate, beispielsweise Natriumhydroxymethansulfinat (Brüggolit) und (Iso-)Ascorbinsäure. Bevorzugt werden Natriumhydroxymethansulfinat und Natriumsulfit eingesetzt. Die Reduktionsmittelmenge beträgt vorzugsweise 0,015 bis 3 Gew.-%, bezogen auf das Gesamtgewicht der Monomere. Die genannten Oxidationsmittel, insbesondere die Salze der Peroxodischwefelsäure, können auch alleinig als thermische Initiatoren eingesetzt werden.

Die Polymerisation erfolgt in Gegenwart von 2 bis 10 Gew.-%, bezogen auf das Gesamtgewicht der Comonomeren, eines oder mehrerer, teilverseifter und niedermolekularer Polyvinylalkohole mit einem Hydrolysegrad von jeweils 80 bis 95 Mol-% und einer Höppler-Viskosität, in 4 %-iger wässriger Lösung, von jeweils 1 bis 5 mPas (Methode nach Höppler bei 20°C, DIN 53015). Vorzugsweise werden 6 bis 10 Gew.-%, besonders bevorzugt 6 bis 8 Gew.-%, jeweils bezogen auf das Gesamtgewicht der Comonomeren, eines oder mehrerer, teilverseifter und niedermolekularer Polyvinylalkohole eingesetzt. Der Hydrolysegrad der teilverseiften und niedermolekularen Polyvinylalkohole beträgt vorzugsweise 85 bis 90 Mol-%, besonders bevorzugt 87 bis 89 Mol-%. Die Höppler-Viskosität in 4 %-iger wässriger Lösung, der teilverseiften und niedermolekularen Polyvinylalkohole, beträgt vorzugsweise 2 bis 4 5 mPas (Methode nach Höppler bei 20°C, DIN 53015). Die genannten Polyvinylalkohole sind im Handel erhältlich und mittels dem Fachmann bekannter Verfahren zugänglich.

Gegebenenfalls können auch teilverseifte und höhermolekulare Polyvinylalkohole mit einem Hydrolysegrad von vorzugsweise 80 bis 95 Mol-% und einer Höppler-Viskosität in 4 %-iger wässriger Lösung von vorzugsweise 8 bis 40 mPas (Methode nach Höppler bei 20°C, DIN 53015) im Gemisch mit den teilverseiften und niedermolekularen Polyvinylalkoholen eingesetzt werden. Gegebenenfalls können auch vollverseifte und höhermolekulare Polyvinylalkohole mit einem Hydrolysegrad von vorzugsweise 98 bis 100 Mol-% und einer Höppler-Viskosität in 4 %-iger wässriger Lösung von vorzugsweise 10 bis 56 mPas (Methode nach Höppler bei 20°C, DIN 53015) im Gemisch mit den teilverseiften und niedermolekularen Polyvinylalkoholen eingesetzt werden. Die teilverseiften und höhermolekularen Polyvinylalkohole und/oder die vollverseiften und höhermolekularen Polyvinylalkohole können im Gemisch, vorzugsweise jeweils in einer Menge von 0 bis 2 Gew.-%, jeweils bezogen auf das Gesamtgewicht der Comonomeren, eingesetzt werden.

Gegebenenfalls können zusätzlich noch geringe Mengen an Emulgatoren bei der Polymerisation verwendet werden, beispielsweise 0,1 bis 2,0 Gew.-%, bezogen auf das Gesamtgewicht der Comonomeren. Vorzugsweise werden während der Polymerisation keine Emulgatoren verwendet, und auch keine Emulgatoren nachträglich zugegeben.

Der Polyvinylalkoholanteil kann dabei insgesamt vor der Polymersiation vorgelegt werden, oder insgesamt während der Polymerisation zudosiert werden, oder teilweise vorgelegt und teilweise zudosiert werden. Der Polyvinylalkoholanteil kann auch teilweise vor oder während der Polymerisation zugegeben werden und der Rest nach Abschluß der Polymerisation nachträglich zugegeben werden, wobei der Anteil, welcher vor oder während der Polymerisation zugegeben wird, mindestens 2 Gew.-%, vorzugsweise mindestens 5 Gew.-% beträgt, jeweils auf das Gesamtgewicht der Comonomeren bezogen.

Die Polymerisation kann in einem Batchverfahren, Semibatchverfahren oder in einem kontinuierlichen Verfahren durchgeführt werden. Die Monomere können dabei insgesamt vorgelegt werden, insgesamt zu dosiert werden oder in Anteilen vorgelegt werden und der Rest nach der Initiierung der Polymerisation zudosiert werden. Die Dosierungen können separat (räumlich und zeitlich) durchgeführt werden oder die zu dosierenden Komponenten können alle oder teilweise voremulgiert dosiert werden.

Die Polymerisation wird im Allgemeinen bis zu einem Umsatz von > 95 Gew.-%, vorzugsweise bis zu einem Umsatz von 95 bis 99 Gew.-%, der unter Polymerisationsbedingungen flüssigen Monomere geführt. Anschließend wird das Polymerisationsgemisch auf einen Druck von 0,1 bis 5,0 bar abs., vorzugsweise 0,1 bis 1,0 bar abs., entspannt.

Die damit erhältlichen wässerigen Vinylacetat-Ethylen-Copolymer-Dispersionen haben einen Feststoffgehalt von 30 bis 75 Gew.-%, vorzugsweise von 50 bis 65 Gew.-%.

Gegenstand der Erfindung ist eine Teppichbeschichtungs-Zusammensetzung zur Verfestigung von Teppichen (beispielsweise Bahnwaren oder Teppichfliesen), enthaltend die wässerige, Polyvinylalkohol-stabilisierte Vinylacetat-Ethylen-Copolymer-Dispersion und 100 bis 1400 Gew.-% Füllstoff, bezogen auf das Vinylacetat-Ethylen-Copolymer (fest/fest). Der Feststoffgehalt der Teppich-Beschichtungs-Zusammensetzung beträgt vorzugsweise 72 bis 83 Gew.-%, besonders bevorzugt 75 bis 80 Gew.-%, jeweils bezogen auf das Gesamtgewicht der Teppichbeschichtungs-Zusammensetzung. Die Teppichbeschichtungs-Zusammensetzung zeichnet sich aus durch eine Brookfield RV Viskosität von < 3000 mPas (Messung mit Brookfield RV Messgerät mit Spindel 4, 20 Upm, bei 25°C) vor der Zugabe von Verdickungsmittel.

Die Teppichbeschichtungs-Zusammensetzungen enthalten neben der wässerigen Vinylacetat-Ethylen-Copolymer-Dispersion noch Füllstoff. Geeignete Füllstoffe sind dem Fachmann bekannt, beispielsweise Kreide, Kaolin, Talk, Flussspat, Flugasche, Aluminiumtrihydrat. Vorzugsweise wird Kreide als Füllstoff verwendet. Die Teppich-Beschichtungs-Zusammensetzung kann auch Verdickungsmittel wie beispielsweise Polyacrylate oder Celluloseether enthalten. Für den Schaumauftrag können Schaumhilfsmittel zugegeben werden. Weitere übliche Zusatzstoffe sind Dispergiermittel, Netzmittel, Pigmente oder Biozide.

Die Teppichbeschichtungs-Zusammensetzung enthält 100 bis 1400 Gew.-Teile Füllstoff auf 100 Teile Vinylacetat-Ethylen-Copolymer (trocken/trocken). Dies wird auch als Füllgrad von 100 % bis 1400 % bezeichnet. Die Menge an Füllstoffen in der Formulierung kann in Abhängigkeit von den gewünschten Beschichtungseigenschaften variieren. Je höher der Füllstoffanteil (Füllgrad) umso geringer sind die mechanischen Eigenschaften.

Für den Vorstrich werden vorzugsweise Rezepturen mit Füllgraden von 300 bis 1400 % verwendet. Bevorzugt sind Füllgrade von 600 bis 1000 % für Vorstriche für Wohnanwendungen und 300 bis 600 % für kommerzielle Anwendungen (Büro, Hotel, Schiffe).

Für den Zweitstrich werden vorzugsweise Rezepturen mit Füllgraden von 275 bis 600 %, für Wohnanwendungen und 200 bis 275 % für kommerzielle Anwendungen (Büro, Hotel, Schiffe) verwendet.

Zur Herstellung der Teppichbeschichtungs-Zusammensetzung kann so vorgegangen werden, dass die Vinylacetat-Ethylen-Copolymer-Dispersion zusammen mit Wasser und Dispergiermittel vorgelegt wird und der Füllstoff eingerührt wird. Bei Verwendung der wässerigen, Polyvinylalkohol-stabilisierten Vinylacetat-Ethylen-Copolymer-Dispersion erhält man dabei eine Zusammensetzung mit einer Brookfield RV Viskosität von ≤ 3000 mPas (Messung mit Brookfield RV Messgerät mit Spindel 4, 20 Upm, bei 25°C). Zur Einstellung der Zielviskosität kann dann Verdickungsmittel zugegeben werden, im Allgemeinen reicht dazu eine Menge von 0,1 bis 3 Gew.-%, bezogen auf die Vinylacetat-Ethylen-Copolymer-Dispersion. Vorzugsweise wird mit dem Verdickungsmittel eine Brookfield RV Viskosität (Messung mit Brookfield RV Messgerät mit Spindel 4, 20 Upm, bei 25°C) von 2000 bis 10000 mPas eingestellt.

Ein weiterer Gegenstand der Erfindung sind Teppiche, welche mit einer erfindungsgemäßen, die Vinylacetat-Ethylen-Copolymer-Dispersion enthaltenden, Teppichbeschichtungs-Zusammensetzung im Vorstrich und/oder Zweitstrich beschichtet sind.

Die Teppichbeschichtungs-Zusammensetzung kann zur Herstellung von Tufting-Teppichen, von Webteppichen oder von Nadelfilzteppichen verwendet werden, wobei die Teppichbeschichtungs-Zusammensetzung mit bekannten Verfahren in bestehenden Anlagen zur Teppichherstellung eingesetzt werden kann.

Die nachfolgenden Beispiele dienen der weiteren Erläuterung der Erfindung:

### Beispiel 1: (erfindungsgemäß)

### (Herstellung der wässerigen Vinylacetat-Ethylen-Copolymer-Dispersion mit hoher Füllstoffverträglichkeit)

In einem Druckreaktor (Volumen: 570 Liter) wurden 130 kg einer 10 Gew.-%-igen wässerigen Polyvinylalkohollösung eines Polyvinylalkohols, mit einer Viskosität nach Höppler in einer 4 Gew.-%-igen Lösung von 4 mPas, und einem Hydrolysegrad von 88 Mol-%, vorgelegt. Zusätzlich dazu wurden 224 kg Vinylacetat und 101,5 kg entionisiertes Wasser vorgelegt. Der Reaktor wurde auf einen Druck von 21 bar und eine Temperatur von 55°C gebracht (entsprechend einer Ethylenmenge von 18,5 kg) und die Polymerisation durch Start der Initiatordosierungen tert.-Butylhydroperoxid (3 Gew.-% in Wasser) und Ascorbinsäure (5 Gew.-% in Wasser), mit je 750 g/h, gestartet. Bei Reaktionsbeginn, erkennbar an einem Temperaturanstieg, wurde die Reaktionstemperatur mit Hilfe der freiwerdenden Polymerisationswärme auf 90°C und der Druck auf 44 bar angehoben. Die Initiatordosierungen wurden auf je 350 g/h reduziert. 45 Minuten nach Reaktionsbeginn wurden weitere Dosierungen gestartet: 40 kg/h Vinylacetat für eine Dauer von 90 Minuten (entsprechend 60 kg Vinylacetat) und 30 kg/h einer 10 Gew.-%-igen wässerigen Polyvinylalkohollösung, mit einer Viskosität nach Höppler in einer 4 Gew.-%-igen Lösung von 4 mPas, und einem Hydrolysegrad von 88 Mol-%, für eine Dauer von 120 Minuten (entsprechend einer Menge von 60 kg). Ethylen wurde bei einem Solldruck von 44 bar nachdosiert bis zu einer Gesamtethylenmenge von 34 kg.

Nach Ende der Dosierungen wurden die Initiatordosierungen noch 30 Minuten mit jeweils 1300 g/h nachdosiert, wobei der Druck auf 20 bar abfiel (Zeitpunkt 1). Anschließend wurde der Ansatz auf 65°C abgekühlt und in einen Drucklosreaktor (Niederdruckreaktor) überführt und dort bei einem Druck von 700 mbar abs. durch Zugabe von 1 kg tert.-Butylhydroperoxid-Lösung (10 Gew.-% in Wasser) und 2 kg Ascorbinsäure-Lösung (5 Gew.-% in Wasser) nachpolymerisiert.

Die erhaltene Dispersion hatte einen Feststoffgehalt von 59 Gew.-%, eine Viskosität von 1800 mPas (Brookfield, 20, 23°C), eine Glasübergangstemperatur Tg von 15,0°C. Das Copolymer enthielt 89 Gew.-% Vinylacetat- und 11 Gew.-% Ethylen-Monomereinheiten. Der Gehalt an Polyvinylalkohol betrug 6 Gew.-%, bezogen auf Comonomere.

### Beispiel 2: (erfindungsgemäß)

(Analog Beispiel 1, wobei während der Polymerisation nur 3 Gew.-% Polyvinylalkohol eingesetzt wurden, und die restlichen 3 Gew.-% nach der Polymerisation der Polymerdispersion zugegeben wurden)

Es wurde analog Beispiel 1 vorgegangen mit dem Unterschied, dass anstelle von 130 kg nur 65 kg Polyvinylalkohol-Lösung vorgelegt wurden, und anstelle von 60 kg nur 30 kg Polyvinylalkohol-Lösung zudosiert wurden. Nach Abschluss der Polymerisation wurden dann 95 kg der Polyvinylalkohol-Lösung der Vinylacetat-Ethylen-Copolymer-Dispersion nachträglich zugegeben.

### Vergleichsbeispiel 3: (nicht erfindungsgemäß)

### (Stabilisierung mit nur 2,4 Gew.-% teilverseiftem, niederviskosen Polyvinylalkohol und 1,8 Gew.-% teilverseiftem, hochviskosem Polyvinylalkohol)

Vinylacetat-Ethylen-Copolymer-Dispersion mit 85 Gew.-% Vinylacetat- und 15 Gew.-% Ethylen-Einheiten und einem Gemisch von 2,4 Gew.-% eines Polyvinylalkohols mit einer Höppler-Viskosität von 4 mPas und einem Hydrolysegrad von 88 Mol-% und 1,8 Gew.-% eines Polyvinylalkohols mit einer Höppler-Viskosität von 26 mPas und einem Hydrolysegrad von 88 Mol-%, wobei sich die Angaben in Gew.-% jeweils auf das Gesamtgewicht der Comonomere beziehen.

### Vergleichsbeispiel 4: (nicht erfindungsgemäß)

### (Stabilisierung mit nur 3,2 Gew.-% teilverseiftem, niederviskosen Polyvinylalkohol und 1,8 Gew.-% nichtionischem Emulgator)

Vinylacetat-Ethylen-Copolymer-Dispersion mit 85 Gew.-% Vinylacetat- und 15 Gew.-% Ethylen-Einheiten und einem Gemisch von 3,2 Gew.-% eines Polyvinylalkohols mit einer Höppler-Viskosität von 5 mPas und einem Hydrolysegrad von 88 Mol-% und 1,8 Gew.-% eines Fettalkoholethoxylats als Emulgator, wobei sich die Angaben in Gew.-% jeweils auf das Gesamtgewicht der Comonomere beziehen.

### Vergleichsbeispiel 5:(nicht erfindungsgemäß)

### (Emulgator-stabilisierte Vinylacetat-Ethylen-Copolymer-Dispersion)

Vinylacetat-Ethylen-Copolymer-Dispersion mit 85 Gew.-% Vinylacetat- und 10 Gew.-% Ethylen-Einheiten, 1 Gew.-% Acrylsäure und 2 Gew.-% Glycidylmethylmethayrcat (GMA) und 2 Gew.-% eines Fettalkoholethoxylats und 1 Gew.-% eines Gemisches von anionischem Sulfosuccinat- und Aklkylbenzolsulfonat-Emulgator, wobei sich die Angaben in Gew.-% jeweils auf das Gesamtgewicht der Comonomere beziehen.

### Herstellung der Teppichbeschichtungs-Zusammensetzungen:

Mit den Dispersionen aus Beispielen 1 und 2 und den Vergleichsbeispielen 3 bis 5 wurden jeweils folgende Rezepturen hergestellt:
Vorstrich mit 1000 % Füllgrad und einem Feststoffgehalt von 78,5 Gew.-%:
100 Gew.Teile trocken einer Vinylacetat-Ethylen-Copolymer-Dispersion gemäß Beispiele 1 bis 2 und Vergl.beispiele 3 bis 5,
1000 Gew.-Teile trocken Kreide (Carbocia 80, Carbocia),
2,0 Gew.-Teile trocken Dispergiermittel (Sokalan CP 10, BASF)
0,6 Gew.-Teile trocken Schaumhilfsmittel (Natriumlaurylsulfat, Disponil SDS, BASF)
ca. 200 Gew.-Teile Wasser zur Einstellung des Festgehalts von 78,5 Gew.-%.

Zweitstrich mit 400 Gew.-% Füllgrad und einem Feststoffgehalt von 79,5 Gew.-%:
100 Gew.Teile trocken einer Vinylacetat-Ethylen-Copolymer-Dispersion gemäß Beispiele 1 bis 2 und Vergl.beispiele 3 bis 5,
400 Gew.-Teile trocken Kreide (Carbocia 80, Carbocia),
0,8 Gew.-Teile trocken Dispergiermittel (Sokalan CP 10, BASF)
0,5 Gew.-Teile trocken Schaumhilfsmittel (Natriumlaurylsulfat, Disponil SDS, BASF)
ca. 30 Gew.-Teile Wasser zur Einstellung des Festgehalts von 79,5 Gew.-%.

Das Wasser und die VAE-Copolymer-Dispersion und das Dispergiermittel wurden jeweils vorgelegt. Anschließend wurde unter Rühren der Füllstoff und danach das Schaumhilfsmittel zugegeben.

Von den Rezepturen wurde danach jeweils die Brookfield-Viskosität gemessen (Messung mit Brookfield RV Messgerät mit Spindel 4, 20 Upm, bei 25°C).

Anschließend wurde mit einem Verdickungsmittel (Acrylatverdicker Matco TR 10, Matco) oder mittels Zugabe von Wasser eine Endviskosität von 6000 bis 7000 mPas eingestellt (Messung mit Brookfield RV Messgerät mit Spindel 4, 20 Upm, bei 25°C).

Die Brookfield RV Viskosität vor Zugabe des Verdickungsmittels ist das Maß für die Füllstoffverträglichkeit. Die Messwerte sind in Tabelle 1 zusammengefasst.

**Tabelle 1: Brookfield Viskositäten in mPas (RV/20 Rpm)vor Verdickerzugabe**

| Dispersion | Stabilisierung | Vorstrich (1000% Füllgrad, Feststoffgehalt 78,5%) | Zweitstrich (400% Füllgrad, Feststoffgehalt 79,5%) |
|---|---|---|---|
| Beispiel 1 | 6 Gew% PVOH (niedermolekular, teilverseift) in Polymerisation | 2400 | 1950 |
| Beispiel 2 | 6 Gew% PVOH (niedermolekular, teilverseift) (3 Gew% in Polymerisation, 3 % nachträglich zugegeben) | 1800 | 1600 |
| Vergleichsbeispiel 3 | < 5 Gew% PVOH (niedermolekular, teilverseift) | 12000 | 7300 |
| Vergleichsbeispiel 4 | 3,2 Gew.-% teilverseiftem, niederviskosen Polyvinylalkohol und 1,8 Gew.-% nichtionischem Emulgator | 1200 | 770 |
| Vergleichsbeispiel 5 | 2 Gew.-% eines nichtionischen Emulgators und 1 Gew.-% eines anionischen | 300 | 550 |

Wie aus der Tabelle ersichtlich ist, können mit der erfindungsgemäßen, mit Polyvinylalkohol stabilisierten Vinylacetat-Ethylen-Copolymer-Dispersion (Beispiel 1 und 2) Vorstriche und Zweitstriche mit Viskositäten von < 3000 mPas vor Verdickerzugabe und bei Feststoffgehältern von 78,5 % bzw. 79,5 % hergestellt werden.

Mit der nicht erfindungsgmäßen Polyvinylalkohol-stabilisierten Dispersion aus dem Vergleichsbeispiel 3 war dies nicht möglich.

Mit der nicht erfindungsgemäßen, mit Emulgator costabilisierten Dispersion (Vergleichsbeispiel 4) oder mit der rein emulgatorstabilsierten Dispersion (Vergleichsbeispiel 5) wurden jeweils Vorstriche mit Viskositäten von < 3000 mPas vor Verdickerzugabe erhalten.

### Testung der Noppenauszugskraft und der Trennfestigkeit von Teppichen:

### Herstellung der Teppichbeschichtungs-Zusammensetzungen:

Zur Untersuchung der mechanischen Eigenschaften wurde im Labor eine Formulierung mit einem Füllgrad von 450 % jeweils für Vorstrich und Zweitstrich eingesetzt. (Laborbenchmarking) In der industriellen Praxis werden zwar höhere Füllgrade für den Vorstrich und geringere Auftragsmengen eingesetzt, aber die im Laborbenchmarking erhaltenen Werte für die Noppenauszugskraft und Trennfestigkeit ermöglichen einen relativen Vergleich zwischen den eingesetzten Polymerdispersionen.

Mit den Dispersionen aus Beispiel 1 und 2 und den Vergleichsbeispielen 3 bis 5 wurden jeweils Formulierungen mit folgender Rezeptur hergestellt:
Laborbechmarkformulierung mit 450 Gew.-% Füllgrad und einem Feststoffgehalt von 81,5 Gew.-%:
100 Gew.Teile trocken einer Vinylacetat-Ethylen-Copolymer-Dispersion gemäß Beispiele 1 bis 2 und Vergl.beispiele 3 bis 5,
450 Gew.-Teile trocken Kreide (Carbocia 80, Carbocia),
0,8 Gew.-Teile trocken Dispergiermittel (Sokalan CP 10, BASF)
0,5 Gew.-Teile trocken Schaumhilfsmittel (Natriumlaurylsulfat, Disponil SDS, BASF)
ca. 20 Gew.-Teile Wasser zur Einstellung des Festgehalts von 81,5 Gew.-%.

Das Wasser und die VAE-Copolymer-Dispersion und das Dispergiermittel wurden jeweils vorgelegt. Anschließend wurde unter Rühren der Füllstoff und danach das Schaumhilfsmittel zugegeben.

Anschließend wurde mit einem Verdickungsmittel (Acrylatverdicker Matco TR 10, Matco) eine Endviskosität von 6000 bis 7000 mPas eingestellt (Messung mit Brookfield RV Messgerät mit Spindel 4, 20 Upm, bei 25°C). Bei Vergleichsbesipiel 3 wurde die Viskosität durch Verdünnen mit Wasser eingestellt, und kein Acrylatverdicker eingesetzt.

### Herstellung der Laborteppichmuster:

Die Formulierungen für Vorstrich und Zweitstrich wurden jeweils im Labor mit einer Küchenmaschine bis Schaumlitergewichte von 950 bis 1015 g/L aufgeschäumt (typischerweise in ca. 3 Minuten).

Als Vorstrich wurden jeweils 148 g geschäumte Formulierung gleichmäßig auf einem 38 cm X 33 cm großen Tuftrohteppich verteilt (Qualität Helsinki von Firma Edel; Schlingenpol Tuftteppich, 100 % Polyamid; 550 g/m² Polgewicht).

Anschließend wurden als Zweitstrich jeweils 60 g geschäumter Formulierung aufgebracht. Der textile Rücken (Polypropylengewebe, Action Bac) aufgelegt und zweimal mit einer 1,6 kg schweren Rolle ohne Druck eingearbeitet und 20 Minuten bei 130°C in einem Ofen getrocknet.

Bei Vergleichsbeispiel 3 wurden wegen des niedrigeren Feststoffgehalts anteilig mehr Formulierung aufgetragen um nach der Trocknung die gleiche Auftragsmenge zu erzielen.

Während die Auftragsmenge für den Zweitstrich der industriell gebräuchlichen Menge entspricht, ist die Auftragsmenge für den Vorstrich mehr als doppelt so groß, um im Labor ein gleichmäßiges Verteilen der Formulierung auf dem Teppich zu ermöglichen.

### Messung der Noppenauszugskraft:

Die Testung der Noppenauszugskraft erfolgte in Anlehnung an die Norm ISO 4919 mit Hilfe einer Zwick Prüfmaschine bei 23°C und 50 % Luftfeuchtigkeit. Die Laborteppichmuster wurden jeweils in den Aufsatz am Boden des Messgerätes eingespannt und eine Nadel in eine Teppichschlaufe eingefädelt. An 10 verschiedenen Teppichschlaufen wurde die Kraft bestimmt, welche erforderlich ist, um eine Schlaufe aus dem Teppich herauszuziehen und der Mittelwert der Messergebnisse als Noppenauszugskraft ausgewertet.

Die Noppenauszugskraft in Newton [N] ist ein Maß für die Güte der Noppenbindung durch den Vorstrich und für die Abnutzungseigenschaften der Teppichoberfläche. Die Ergebnisse sind in Tabelle 2 zusammengefasst.

### Messung der Trennfestigkeit:

Die Trennfestigkeit wurde anlehnend an DIN EN ISO 11857 mit Hilfe einer Zwick Prüfmaschine bei 23°C und 50 % Luftfeuchtigkeit bestimmt. Es wurden jeweils drei Proben der Laborteppichmuster in Maschinenlaufrichtung mit einer Breite von 5 cm und einer Länge von 20 cm zugeschnitten und an der Schmalseite von Hand auf einer Länge von 5 cm getrennt. Die angetrennte Probe wurde in eine Zwick Prüfmaschine eingespannt und mit einer Geschwindigkeit von 300 mm/min wurde der Zweitrücken vom Teppich abgetrennt.

Der Mittelwert der Spitzen wurde bestimmt, wobei die ersten 25 % und die letzten 25 % der Spitzen nicht berücksichtigt wurden und der Gesamtmittelwert als Trennfestigkeit in Newton [N] angegeben wurde. Die Ergebnisse sind in Tabelle 2 zusammengefasst.

**Tabelle 2:**

| Dispersion | Noppenauszugskraft [N] | Trennfestigkeit [N] |
|---|---|---|
| Beispiel 1 | 42,5 | 55,2 |
| Beispiel 2 | 38,9 | 38,3 |
| Vergleichsbeispiel 3 | 43,1 | 52,0 |
| Vergleichsbeispiel 4 | 38,0 | 33,8 |
| Vergleichsbeispiel 5 | 38,6 | 30,2 |

### Zusammenfassung und Interpretation der Ergebnisse:

Rein Polyvinylalkohol stabilisierte Vinylacetat/Ethylen Dispersionen (Vergleichsbeispiel 3) zeigen in der Regel höhere mechanische Festigkeiten, vor allem höhere Trennfestigkeiten (siehe Tabelle 2), sind aber nicht ausreichend Füllstoffverträglich (siehe Tabelle 1).

Die Polyvinylalkohol-stabilisierte Vinylacetat-Ethylen-Copolymer-Dispersion aus Beispiel 1 zeigte sowohl hohe mechanische Eigenschaften, vor allem hohe Trennfestigkeit (Tabelle 2), als auch eine gute Füllstoffverträglichkeit (Tabelle 1)

Bei nachträglicher Zugabe von PVOH (Beispiel 2) wird ebenfalls eine höhere Füllstoffverträglichkeit und gute mechanische Eigenschaften erhalten.

Die zusätzlich mit Emulgator stabilisierte Dispersion (Vergleichsbeispiel 4) oder die ausschließlich mit Emulgator stabilisierte Dispersion (Vergleichsbeispiel 5) zeigen zwar gute Füllstoffverträglichkeiten (Tabelle 1), aber schlechtere mechanische Eigenschaften, vor allem geringere Trockenfestigkeiten (Tabelle 2).

## Patentansprüche

1. Teppichbeschichtungs-Zusammensetzung zur Verfestigung von Teppichen enthaltend eine wässerige Vinylacetat-Ethylen-Copolymer-Dispersion, welche mittels radikalisch initiierter Emulsionspolymerisation, in wässerigem Medium, von Vinylacetat und Ethylen und gegebenenfalls weiteren ethylenisch ungesättigten Comonomeren, erhalten wird, **dadurch gekennzeichnet, dass** zur Stabilisierung der Dispersion 5 bis 10 Gew.-%, bezogen auf das Gesamtgewicht der Comonomeren, eines oder mehrerer, teilverseifter und niedermolekularer Polyvinylalkohole mit einem Hydrolysegrad von jeweils 80 bis 95 Mol-% und einer Höppler-Viskosität, in 4 %-iger wässriger Lösung, von jeweils 1 bis 5 mPas (Methode nach Höppler bei 20°C, DIN 53015) enthalten sind, und 100 bis 1400 Gew.-% Füllstoff, bezogen auf 100 Gew.-% Vinylacetat-Ethylen-Copolymer (fest/fest) enthalten sind.

2. Teppichbeschichtungs-Zusammensetzung zur Verfestigung von Teppichen gemäß Anspruch 1, **dadurch gekennzeichnet, dass** 65 bis 99 Gew.-% Vinylacetat und 1 bis 30 Gew.-% Ethylen und gegebenenfalls bis zu 10 Gew.-% weitere Comonomere copolymerisiert werden.

3. Teppichbeschichtungs-Zusammensetzung zur Verfestigung von Teppichen gemäß Anspruch 1 oder 2, **dadurch gekennzeichnet, dass** teilverseifte und höhermolekulare Polyvinylalkohole mit einem Hydrolysegrad von 80 bis 95 Mol-% und einer Höppler-Viskosität in 4 %-iger wässriger Lösung von 8 bis 40 mPas (Methode nach Höppler bei 20°C, DIN 53015) in einer Menge von 0 bis 2 Gew.-%, bezogen auf das Gesamtgewicht der Comonomeren, im Gemisch mit dem teilverseiften und niedermolekularen Polyvinylalkohol eingesetzt werden.

4. Teppichbeschichtungs-Zusammensetzung zur Verfestigung von Teppichen gemäß Anspruch 1 bis 3, **dadurch gekennzeichnet, dass** vollverseifte und höhermolekulare Polyvinylalkohole mit einem Hydrolysegrad von 98 bis 100 Mol-% und einer Höppler-Viskosität in 4 %-iger wässriger Lösung von 10 bis 56 mPas (Methode nach Höppler bei 20°C, DIN 53015) in einer Menge von 0 bis 2 Gew.-%, bezogen auf das Gesamtgewicht der Comonomeren, im Gemisch mit dem teilverseiften und niedermolekularen Polyvinylalkohol eingesetzt werden.

5. Teppichbeschichtungs-Zusammensetzung zur Verfestigung von Teppichen gemäß Anspruch 1 bis 4, **dadurch gekennzeichnet, dass** während der Polymerisation keine Emulgatoren verwendet werden und auch keine Emulgatoren nachträglich zugegeben.

6. Teppichbeschichtungs-Zusammensetzung zur Verfestigung von Teppichen gemäß Anspruch 1 bis 5, **dadurch gekennzeichnet, dass** der Polyvinylalkoholanteil insgesamt vor der Polymersiation vorgelegt wird, oder insgesamt während der Polymerisation zudosiert wird, oder teilweise vorgelegt und teilweise zudosiert wird, oder der Polyvinylalkoholanteil teilweise vor oder während der Polymerisation zugegeben wird und der Rest nach Abschluß der Polymerisation nachträglich zugegeben wird, wobei im letzteren Fall der Anteil, welcher vor oder während der Polymerisation zugegeben wird, mindestens 2 Gew.-%, vorzugsweise mindestens 5 Gew.-% beträgt, jeweils auf das Gesamtgewicht der Comonomeren bezogen.

7. Teppichbeschichtungs-Zusammensetzung zur Verfestigung von Teppichen gemäß Anspruch 1 bis 6 mit einem Feststoffgehalt von 72 bis 83 Gew.-%, bezogen auf das Gesamtgewicht der Teppichbeschichtungs-Zusammensetzung.

8. Teppiche, welche mit der Teppichbeschichtungs-Zusammensetzung gemäß Anspruch 1 bis 7 im Vorstrich und/oder Zweitstrich beschichtet sind.

## Claims

1. Carpet coating composition for consolidating carpets, which comprises an aqueous vinyl acetate-ethylene copolymer dispersion obtained via free-radically initiated emulsion polymerization, in an aqueous medium, of vinyl acetate and ethylene and optionally further ethylenically unsaturated comonomers, **characterized in that** the dispersion comprises a stabilizing system comprising from 5 to 10 wt%, based on total comonomers, of one or more, partially hydrolyzed and low molecular weight polyvinyl alcohols having a hydrolysis degree of respectively 80 to 95 mol% and a Hoeppler viscosity, in 4% aqueous solution, of respectively 1 to 5 mPas (DIN 53015 Hoeppler method at 20°C) and comprising from 100 to 1400 wt% of filler, based on 100 wt% of vinyl acetate-ethylene copolymer (solids/solids).

2. Carpet coating composition for consolidating carpets according to Claim 1, **characterized in that** from 65 to 99 wt% of vinyl acetate and from 1 to 30 wt% of ethylene and optionally up to 10 wt% of further comonomers are copolymerized.

3. Carpet coating composition for consolidating carpets according to Claim 1 or 2, **characterized in that** partially hydrolyzed and high molecular weight polyvinyl alcohols having a hydrolysis degree of 80 to 95 mol% and a Hoeppler viscosity in 4% aqueous solution of 8 to 40 mPas (DIN 53015 Hoeppler method at 20°C) are employed in an amount of 0 to 2 wt%, based on total comonomers, in admixture with the partially hydrolyzed and low molecular weight polyvinyl alcohol.

4. Carpet coating composition for consolidating carpets according to Claim 1 to 3, **characterized in that** fully hydrolyzed and high molecular weight polyvinyl alcohols having a hydrolysis degree of 98 to 100 mol% and a Hoeppler viscosity in 4% aqueous solution of 10 to 56 mPas (DIN 53015 Hoeppler method at 20°C) are employed in an amount of 0 to 2 wt%, based on total comonomers, in admixture with the partially hydrolyzed and low molecular weight polyvinyl alcohol.

5. Carpet coating composition for consolidating carpets according to Claim 1 to 4, **characterized in that** no emulsifiers are used during the polymerization nor are any emulsifiers admixed subsequently.

6. Carpet coating composition for consolidating carpets according to Claim 1 to 5, **characterized in that** the polyvinyl alcohol fraction is wholly included in the initial charge prior to the polymerization, or wholly added during the polymerization, or partly included in the initial charge and partly added, or the polyvinyl alcohol fraction is admixed partly before or during the polymerization and the balance is admixed subsequently after completion of the polymerization, subject to the proviso that in the latter case the proportion admixed before or during the polymerization is at least 2 wt%, preferably at least 5 wt%, both based on total comonomers.

7. Carpet coating composition for consolidating carpets according to Claim 1 to 6 having a solids content of 72 to 83 wt%, based on the total weight of the carpet coating composition.

8. Carpets coated with the carpet coating composition according to Claim 1 to 7 in the precoat and/or secondary coating.

## Revendications

1. Composition de revêtement de tapis pour la consolidation de tapis, contenant une dispersion aqueuse de copolymère d'acétate de vinyle-éthylène, qui est obtenue par polymérisation en émulsion initiée radicalairement, dans un milieu aqueux, d'acétate de vinyle et d'éthylène et éventuellement de comonomères éthyléniquement insaturés supplémentaires, **caractérisée en ce que** 5 à 10 % en poids, par rapport au poids total des comonomères, d'un ou de plusieurs alcools polyvinyliques partiellement saponifiés et de faible poids moléculaire, ayant un degré d'hydrolyse à chaque fois de 80 à 95 % en poids et une viscosité d'Höppler, dans une solution aqueuse à 4 %, à chaque fois de 1 à 5 mPas (méthode selon Höppler à 20 °C, DIN 53015), sont contenus pour la stabilisation de la dispersion, et 100 à 1 400 % en poids de charges, par rapport à 100 % en poids de copolymère d'acétate de vinyle-éthylène (solide/solide), sont contenues.

2. Composition de revêtement de tamis pour la consolidation de tapis selon la revendication 1, **caractérisée en ce que** 65 à 99 % en poids d'acétate de vinyle et 1 à 30 % en poids d'éthylène, et éventuellement jusqu'à 10 % en poids de comonomères supplémentaires sont copolymérisés.

3. Composition de revêtement de tamis pour la consolidation de tapis selon la revendication 1 ou 2, **caractérisée en ce que** des alcools polyvinyliques partiellement saponifiés et de poids moléculaire élevé, ayant un degré d'hydrolyse de 80 à 95 % en moles et une viscosité d'Höppler dans une solution aqueuse à 4 % de 8 à 40 mPas (méthode selon Höppler à 20 °C, DIN 53015), sont utilisés en une quantité de 0 à 2 % en poids, par rapport au poids total des comonomères, en mélange avec l'alcool polyvinylique partiellement saponifié et de poids moléculaire faible.

4. Composition de revêtement de tamis pour la consolidation de tapis selon les revendications 1 à 3, **caractérisée en ce que** des alcools polyvinyliques entièrement saponifiés et de poids moléculaire élevé, ayant un degré d'hydrolyse de 98 à 100 % en moles et une viscosité d'Höppler dans une solution aqueuse à 4 % de 10 à 56 mPas (méthode selon Höppler à 20 °C, DIN 53015), sont utilisés en une quantité de 0 à 2 % en poids, par rapport au poids total des comonomères, en mélange avec l'alcool polyvinylique partiellement saponifié et de poids moléculaire faible.

5. Composition de revêtement de tamis pour la consolidation de tapis selon les revendications 1 à 4, **caractérisée en ce qu'**aucun émulsifiant n'est utilisé pendant la polymérisation et aucun émulsifiant n'est ajouté ultérieurement.

6. Composition de revêtement de tamis pour la consolidation de tapis selon les revendications 1 à 5, **caractérisée en ce que** la proportion d'alcool polyvinylique est chargée initialement en totalité avant la polymérisation, ou ajoutée en totalité pendant la polymérisation, ou chargée initialement en partie et ajoutée en partie, ou la proportion d'alcool polyvinylique est ajoutée en partie avant ou pendant la polymérisation, et le reste est ajouté ultérieurement après la fin de la polymérisation ; dans le dernier cas, la proportion qui est ajoutée avant ou pendant la polymérisation étant d'au moins 2 % en poids, de préférence d'au moins 5 % en poids, à chaque fois par rapport au poids total des monomères.

7. Composition de revêtement de tamis pour la consolidation de tapis selon les revendications 1 à 6, ayant une teneur en solides de 72 à 83 % en poids, par rapport au poids total de la composition de revêtement de tapis.

8. Tapis, qui sont revêtus avec la composition de revêtement de tapis selon les revendications 1 à 7 dans la précouche et/ou la deuxième couche.
